# EUROPEAN PATENT APPLICATION

(11) **EP 0 942 417 A2**
(43) Date of publication of application: **15.09.1999**
(21) Application number: 99301811.8
(22) Date of filing: 10.03.1999
(51) Int. Cl.: G11B 20/00, G06F 1/00, H04N 5/913, G07F 17/16

(54) **Recording medium and information transmission system**

(30) Priority: 12.03.1998 JP 06074798
(71) Applicant: SONY CORPORATION, Tokyo 141 (JP)
(72) Inventor: Hirai, Jun, c/o Sony Corporation, Tokyo 141 (JP)
(74) Representative: Pratt, Richard Wilson

(57) **Abstract**

Accounting information is written in a recording medium A in which contents are to be recorded by way of pre-paid system, and money is withdrawn each time copying is operated. The copied title is read out from the recording medium A when the contents are downloaded from the service terminal connected to the contents service provider and transmitted to the contents service provider. A recording medium and information transmission system is thus capable of copying contents in a recording medium without troublesome user work and paying properly and automatically to the copyright holder and distributor.

## Description

The present invention relates to recording medium and information transmission system. An illustrative embodiment of the present invention relates to a recording medium and an information transmission system for accounting for copying the information such as music with copyright.

For example in the case of CD (Compact Disc) among various recording media, a distribution style that users purchase read-only medium (ROM) which is mass-produced by stamping has been employed heretofore. The purchase price include copyright cost, manufacturing cost, and distribution cost. However, in such distribution style there has been no reasonable method to pay for copyright when a CD user wants to copy the CD. Though the selling price of the copied hardware or medium is returned partially to the copyright holder in the form of the so-called LEVY, the returning is involved in a problem of allotment because the copied literary work (referred to as contents) cannot be identified.

A copyright holder is disappointed with copying of the contents without payment because the copyright holder wants to sell them to get a royalty. Therefore, a system for returning consideration to a copyright holder for copying has been expected to be developed. As a general method, there can be a style of method in which ID of the copied contents and date of copying are written in an IC card and the user pays for it.

However, required addition of a drive for reading/writing an IC card to a contents recording/reproducing apparatus results in difficulty in low cost production and a user is required to operate insertion/drawing out operation of an IC card in addition to insertion/drawing out operation of a medium in which the contents are recorded, and such operation is troublesome.

The present invention seeks to provide an information transmission system for copying contents in a recording medium without troublesome operation to be performed by a user and simultaneously for paying properly to the copyright holder and distributor automatically.
(1) in one aspect of the present invention, the accounting information is written in rewritable form in a recording medium when contents with copyright are copied.

The above-mentioned accounting information is featured in that it is formed by interpolating the accounting information and subdata in the contents in the form of electronic watermark with compression or without compression of the signal, and/or formed by ciphering the accounting information and subdata, further featured in that the copying is restricted if the written accounting information is not authenticated normally, further featured in that the recording medium is a recording medium to which money is charged previously and the accounting information is the accounting information from which a money amount corresponding to the copy charge is subtracted for each the copying, further featured in that the accounting information is the accounting information to which a money amount corresponding to the amount of user payment is added, and further featured in that the copying is operated at a speed higher than the normal recording/reproducing speed.

A second aspect of the present invention provides a recording medium in which the accounting information and half-disclosed contents information are recorded, and the contents are full-disclosed on condition of payment of the charge. Furthermore, the recording medium is a pre-paid recording medium and the charge is paid by reducing the accounting information, and further featured in that the utilization frequency information of the contents is recorded in the half-disclosed form or in the ciphered form.

The information transmission system according to A third aspect of the present invention provides an information transmission system that transmits the accounting information through a recording medium to which contents information is recorded when the contents information with copyright is to be copied or reproduced.

The accounting information in the above-mentioned information transmission system is featured in that it is formed by interpolating the accounting information and subdata in the contents in the form of electronic watermark and by compressing the signal, and further featured in that the copying or reproduction is restricted if the written accounting information is not authenticated normally.

The information transmission system is featured in that it is provided with an information source in which the contents information and the accounting information are accumulated and an information transmission means disposed between the information source and the recording medium, and further featured in that money is charged previously in the recording medium, the accounting information and subdata are recorded in the recording medium, and when the contents information is to be copied or reproduced, the information transmission means checks the accounting information and subdata stored in the recording medium, and then the accounting information which is formed by subtracting the money amount corresponding to copying or reproducing the contents information and subdata in the information source is recorded.

The information transmission means is featured in that it performs accounting to the recording medium correspondingly to the money amount of user payment, and further featured in that the previously charged money amount is allocated for adjusting based on the accounting information and subdata checked by the information transmission means.

The above-mentioned recording medium is featured in that it is a medium in which the accounting information and half-disclosed contents information are recorded, and the contents are full-disclosed on condition of payment of the charge.

The above-mentioned recording medium is featured in that it is a pre-paid recording medium and the charge is paid by reducing the accounting information, and further featured in that the contents utilization frequency information is recorded in half-disclosed form or ciphered form.

The above-mentioned information source is featured in that it is a service provider who manages the information and the information transmission means is a service terminal connected to the service provider.

The above-mentioned information source is featured in that it is a recording medium in which the contents information and accounting information are recorded, and the transmission means is a recording/reproducing apparatus having a memory for storing data, and further featured in that the recording/reproducing apparatus comprises a reproducing unit for reproducing the information in a recording medium in which the contents information and accounting information are recorded, a determining unit for determining the coincidence between the subdata reproduced by the reproducing unit and the data interpolated in the form of electronic watermark, a memory for storing the reproduced information when the determining unit determines the information items to be identical, and a recording unit for recording the information stored in the memory in the recording medium when the determination gives the result of coincidence.

The above-mentioned copying or reproducing is featured in that it is performed at a speed higher than the normal recording/reproducing speed, and further featured in that the recording medium comprises a recording medium with high speed retrieval.
2) In an embodiment of the present invention, the accounting information is also recorded in a medium in which the contents are recorded, therefore this medium is very convenient because a small disc medium such as a minidisc is so potable as a card for being carried about.

For the above-mentioned copying, instantaneous copy technique is used. Currently, instantaneous copy technique which is capable of copying at a transfer rate of 4.7 Mbps for a minidisc with a 64 mm size having high density 650 MB has been developed. If recording is performed with audio compression of 64 kbps, then copy speed will be 4700/64 namely 73 times. It takes 4*60/73 namely about 3 minutes copying time to copy a music of 4 minutes.

If recording is performed at 64 kbps, then music of 650*8*1000/64=81250 seconds namely about 23 hours is recorded. If all the music is pre-recorded, the price of the music will be excessively high. On the other hand, if a consumer can buy a music at a price of, for example, 300 yen per music and accumulates many music gradually, such a purchase style is acceptable for a consumer because the consumer can collect favorite music selectively.

A consumer will pay willingly for convenience of instantaneous copying new technology. Copying is performed in the sense of pushing in/pull out of a disc rather than in the sense of copying, and accounting is processed automatically in a recording/reproducing apparatus (information transmission means) without troublesome work.

First, a user pays charge for one music or buys a recording medium in which the pre-paid accounting information has been written (money is charged), and downloads, for example, one music using an information transmission means, for example, a service terminal installed in a record shop or convenience store and connected to an information source such as a service provider through a leased line.

When, money amount for one music is subtracted from the balance which has been recorded in the recording medium and the new balance is written in the recording medium during downloading. The above-mentioned service provider reads which music is downloaded from the service terminal, and allocates the revenue for the music obtained from the written pre-paid recording medium to the copyright holder.

If a user copies in another recording medium, money is withdrawn from pre-paid money in a medium to be recorded, and copying is allowed. The service provider identifies which music has been copied through the service terminal when a music is downloaded in the recorded recording medium using the service terminal, and allocates the revenue obtained from pre-paid money to the copyright holder.

Digital copy is allowed on condition of accounting, and analog copy is prohibited by detecting electronic watermark.

As described hereinbefore, when the audio information or other information with copyright is recorded in a recording medium such as a disc, accounting is performed as a counter value for enjoying the literal work such as music each time a user copies or reproduces the literal work, and the charge is allocated to the copyright holder and distributor. An embodiment of the present invention is particularly rational for the case of a potable and recordable medium such as minidisc which is capable of copying at high speed. A user can buy music by one piece of music, and therefore embodiments of the present invention will provide a new sales field different from the conventional CD album sales field. Particularly, because the information of user's preference is naturally and automatically collected, the distribution can be made efficient.

For a better understanding of the present invention, reference will now be made by way of example to the accompanying drawings in which:
Fig. 1 is a block diagram for illustrating accumulation of contents in one embodiment of the present invention.
Fig. 2 is a block diagram for illustrating flow of contents and accounting information in one embodiment of the present invention.
Fig. 3 is a block diagram for illustrating copying operation by a user in another embodiment of the present invention.

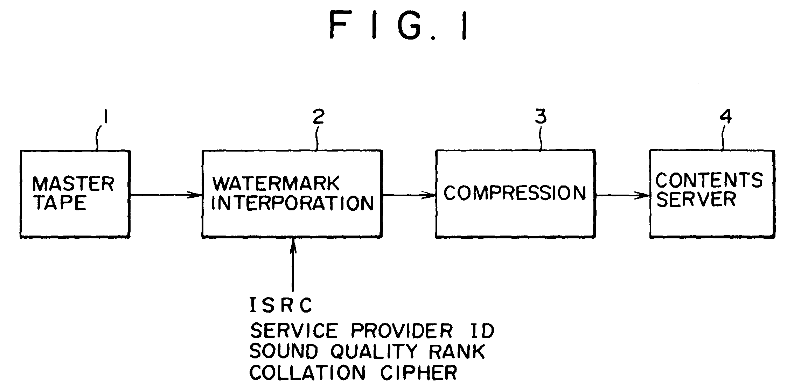

The embodiments are described in detail hereinafter with reference to the drawings. First, accumulation of contents (literary works) is described with reference to Fig. 1 IRSC which is to be served as a subdata, service provider ID, sound quality rank, collation cipher, and service system ID are interpolated as the electronic watermark by an interpolation unit 2. A signal having the interpolated electronic watermark is compressed in a compression unit 3, and accumulated in contents server 4.

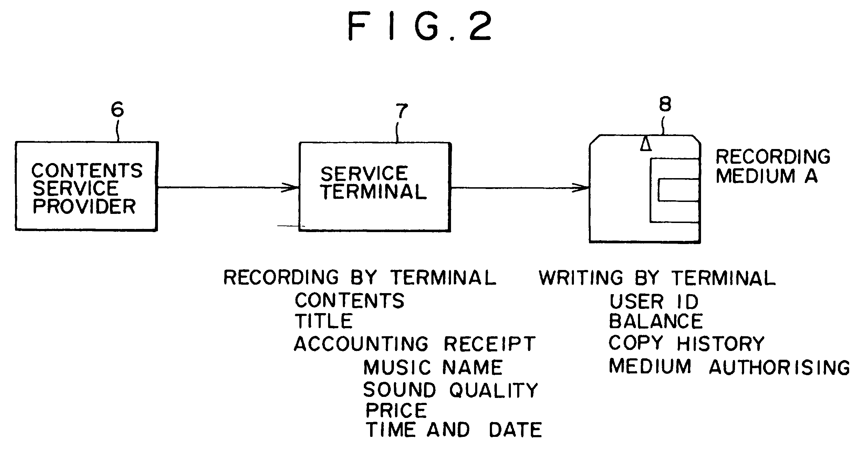

Next, flow of contents and accounting information is described with reference to Fig. 2. 6 represents a contents service provider (information source) which provides and manages the information accumulated in the above-mentioned contents server 4. 7 represents a service terminal (information transmission means) installed, for example, in a record shop or convenience store and connected to the contents provider 6 through a leased line. 8 represents a recording medium A such as a minidisc in which a user wants to copy or reproduce.

When a user makes a request for a download of contents from the service terminal 7, the contents service provider 6 sends out the contents with an electronic watermark accumulated in the contents server 4 through the leased line.

The service terminal 7 reads the user ID, balance, copy history, and medium authorized ID from the recording medium A8 and confirms the identity, and then starts downloading. The service terminal 7 records the contents, title, ISRC, receipt for payment, sound quality, date and time, and collation cipher in the recording medium A8. The contents are recorded in exchange for reduction of the balance pre-charged in the recording medium A8. The money amount of payment for the contents is varied by recording the copy date as described herein above.

When the contents are copied as described herein above, the contents provider 6 reads which music was downloaded from the service terminal 7, and allocates the pre-paid revenue to the copyright holder.

If the authentication of the above-mentioned accounting information is performed improperly, the copying is restricted.

The service terminal 7 can precharge contents in the recording medium A8 against payment of cash. Alternatively, a user can download against cash payment using the service terminal 7.

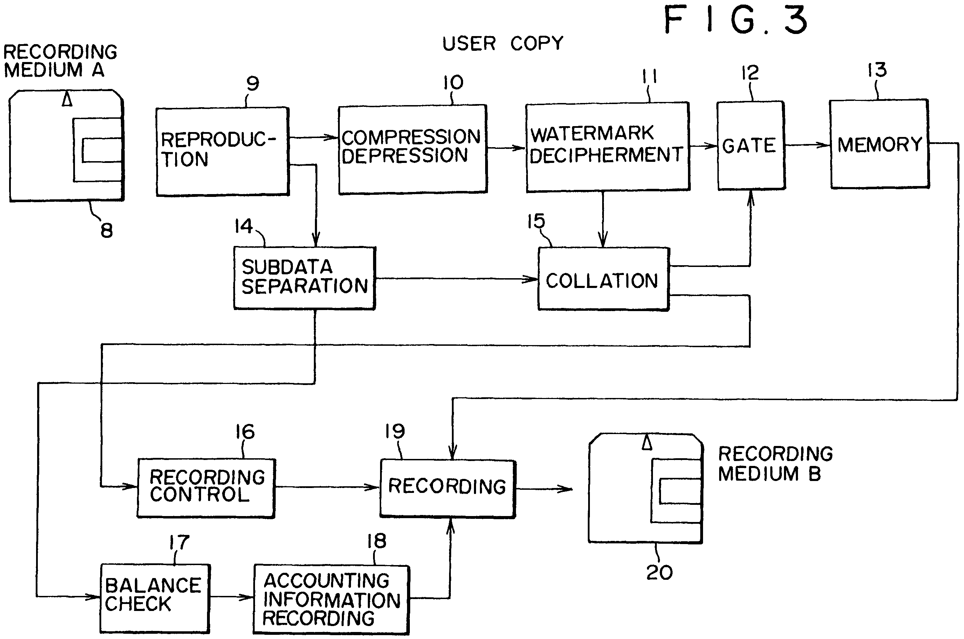

Next, user copy is described with reference to Fig. 3. In this embodiment, an example in which contents copied from the recording medium A8, (in this case, served as an information source) having the contents copied using one recording/reproducing apparatus (information transmission means) through a memory, to a recording medium B20 will be described.

A signal obtained by reproducing the recording medium A8 using a reproducing unit 9 is defrosted in the compression/depression unit 10. The electronic watermark of the defrosted signal is deciphered by a decipher unit 11. On the other hand, a subdata separation unit 14 separates subdata from the signal obtained by the reproducing unit 9, and reads out the accounting information and collation cipher.

A collation unit 15 collates the deciphered collation cipher supplied from the electronic watermark decipher unit 11 with the collation cipher supplied from the subdata separation unit 14, and if both collation ciphers are identical, the gate 12 is opened and the contents are written in the memory 13.

A recording control unit 16 allows a recording unit 19 to operate recording in response to the above-mentioned coincidence. A accounting information recording unit 18 writes through the recording unit 19 a new balance which is generated by subtracting the money amount for one copy together with the contents supplied from the memory 13 in the recording medium B20 after checking the balance in a balance checking unit 17, and the copying is completed. The above-mentioned reproduction and recording are performed at high speed (for example, 100× speed).

After the contents are copied in the recording medium B20 as described herein above, when for example, another music is bought (copied) using the service terminal 7, the service terminal 7 reads out when and what music is copied in the recording medium B20, and the contents service provider 6 determines the allocation of already paid money.

For allocation of charged money for the above-mentioned copying or reproduction, alternatively the system may have a structure in which copy process is recorded using the user ID or apparatus ID when accounting information is transmitted, the information is transmitted from the service terminal 7 to the contents service provider 6, and the charged money is collected partially to a copy provider.

The above-mentioned contents service provider 6 obtains the title of copied contents from the service terminal 7 and seizes the preference of customers based on utilization frequency, and recommendation may be introduced based on the preference. Such service helps users to search the contents.

The case that the pre-paid blank disc such as the above-mentioned recording media 8 and 20 is used is described in the embodiment of the present invention, however alternatively, another embodiment of the present invention in which contents are recorded previously in a recording medium and the contents are half-disclosed, and then full-disclosed on condition of withdrawal from pre-paid money may be used.

In this case further, the recommendation based on the above-mentioned customer preference information is recorded in a recording medium of a customer, and the information is half-disclosed, and then full-disclosed on condition of withdrawal from the pre-paid money on the decision by the customer.

As described hereinbefore, because the accounting information is transmitted through a recording medium in which the literal work is to be recorded when the information with copyright such as music is copied, embodiments of the present invention seek to provide various advantages described herein under.
(1) The contents are copied in a recording medium at high speed without troublesome work of a user. In other words, copying is operated in the sense of, for example, pushing in and pull out operation of a disc rather than in the sense of copying, and the information transmission means such as recording/reproducing apparatus processes automatically accounting procedure without troublesome work.
(2) Because the accounting information is written in a recording medium such as a disc of a user, other recording medium such as a card slot is not necessary to be used, and accounting is performed at a low cost
(3) A system which is capable of accounting automatically and properly against users for copyright holders and distributors is realized. In detail, when a sound information or other type of information with copyright is recorded in a recording medium such as a disc or semiconductor, each time an information is copied or reproduced, charged money is paid consistently to the copyright holder and distributor as counter value for enjoyment of the literal work such as music enjoyed by the user.
(4) An embodiment of the present invention is rational particularly in the case that copying is operated at a high speed in a portable recordable medium such as a minidisc. In detail, a user can buy music by one piece of music, therefore embodiments of this invention possibly provides a new field which is different from the conventional sales style of CD album.

## Claims

1. A recording medium to which the accounting information is written in a rewritable form when contents with copyright are copied.

2. The recording medium as claimed in claim 1, wherein said accounting information is formed by interpolating the accounting information and subdata in the contents in the form of electronic watermark with compression or without compression of said signal, and/or formed by ciphering the accounting information and subdata.

3. The recording medium as claimed in claim 1 or 2, wherein said copying is restricted if said written accounting information is not authenticated normally.

4. The recording medium as claimed in claim 1, wherein said recording medium is a recording medium to which money is charged previously, and said accounting information is the accounting information from which a money amount corresponding to the copy charge is subtracted for each said copying.

5. The recording medium as claimed in claim 4, wherein said subtraction is performed by recording copy date.

6. The recording medium as claimed in claim 1, wherein said accounting information is the accounting information to which a money amount corresponding to the amount of user payment is added.

7. The recording medium as claimed in claim 1, wherein said copying is operated at a speed higher than the normal recording/reproducing speed.

8. A recording medium in which the accounting information and half-disclosed content information are recorded, and said content is full-disclosed on condition of payment of the charge.

9. The recording medium as claimed in claim 8, wherein said recording medium is a pre-paid recording medium, and said charge is paid by reducing the accounting information.

10. The recording medium as claimed in claim 8 or 9, wherein the information on the utilization frequency of said contents is recorded or recorded in the ciphered form.

11. An information transmission system for transmitting the accounting information through a recording medium to which a content information is recorded when said content information with copyright is to be copied or reproduced.

12. The information transmission system as claimed in claim 11, wherein said accounting information is formed by interpolating the accounting information and subdata in the content in the form of electronic watermark and by compressing said signal.

13. The information transmission system as claimed in claim 11 or 12, wherein said copying or reproduction is restricted if said written accounting information is not authenticated normally.

14. The information transmission system as claimed in claim 11,12 or 13 wherein said information transmission system is provided with an information source in which said content information and said accounting information are accumulated and an information transmission means disposed between said information source and said recording medium.

15. The information transmission system as claimed in claim 14, wherein money is charged previously in said recording medium, said accounting information and subdata are recorded in said recording medium, and when said content information is to be copied or reproduced, said information transmission means checks the accounting information and subdata stored in said recording medium, and then the accounting information which is formed by subtracting the money amount corresponding to copying or reproducing the content information and subdata in said information source is recorded.

16. The information transmission system as claimed in claim 14, wherein said information transmission means performs accounting to said recording medium correspondingly to the money amount of user payment.

17. The information transmission system as claimed in claim 14, wherein the previously charged money amount is allocated for adjusting based on the accounting information and subdata checked by said information transmission means.

18. The information transmission system as claimed in claim 11, wherein said recording medium is a medium in which the accounting information and half-disclosed content information are recorded, and said content is full-disclosed on condition of payment of the charge.

19. The information transmission system as claimed in claim 18, wherein said recording medium is a pre-paid recording medium, and said charge is paid by reducing the accounting information.

20. The information transmission system as claimed in claim 18, wherein said content utilization frequency information is recorded in half-disclosed form or ciphered form.

21. The information transmission system as claimed in claim 14, wherein said information source is a service provider who manages said information, and said information transmission means is a service terminal connected to said service provider.

22. The information transmission system as claimed in claim 14, wherein said information source is a recording medium in which said content information and accounting information are recorded, and said transmission means is a recording/reproducing apparatus having a memory for storing data.

23. The information transmission system as claimed in claim 22, wherein said recording/reproducing apparatus comprises a reproducing unit for reproducing the information in a recording medium in which said content information and accounting information are recorded, a determining unit for determining the coincidence between the subdata reproduced by said reproducing unit and the data interpolated in the form of electronic watermark, a memory for storing said reproduced information when said determining unit determines the information items to be identical, and a recording unit for recording the information stored in said memory in the recording medium when said determination gives the result of coincidence.

24. The information transmission system as claimed in claim 11, wherein said copying or reproducing is performed at a speed higher than the normal recording/reproducing speed.

25. A recording medium as claimed in claim 1, wherein said recording medium comprises a recording medium with high speed retrieval.

26. The recording medium as claimed in claim 11, wherein said recording medium comprises a recording medium with high speed retrieval.
